# EUROPEAN PATENT SPECIFICATION

(11) **EP 0 933 956 B1**
(45) Date of publication and mention of the grant of the patent: **12.05.2004**
(21) Application number: 98100657.0
(22) Date of filing: 16.01.1998
(51) Int. Cl.: H04Q 7/38, H04Q 7/26

(54) **Method and system for routing a paging message from a public land mobile network to a mobile station in a local communication system**
Verfahren und System zur Leitweglenkung einer Funkrufnachricht von einem öffentlichen mobilen Netz nach einer Mobilstation in einem lokalen Kommunikatonssystem
Procédé et système d'acheminement d'un message d'appel radio d'un réseau mobile public à une station mobile dans un système de communication local

(43) Date of publication of application: 04.08.1999
(73) Proprietor: Nokia Corporation, 02150 Espoo (FI)
(72) Inventor: Purovesi, Päivi, 02130 Espoo (FI); Larikka, Tapani, 00390 Helsinki (FI)
(74) Representative: COHAUSZ & FLORACK

(56) References cited:
- EP-A- 0 558 041
- EP-A- 0 766 427
- US-A- 5 305 466

## Description

The invention relates to a method and a system for setting-up a mobile call by routing a paging message from a public land mobile network herein after designated as PLMN via a mobile switching centre herein after designated as MSC to a mobile station herein after designated as MS used by a mobile subscriber located within a location area herein after designated as LA of an office communication system herein after designated as OS, wherein the MSC communicates with at least one OS via a respective gateway herein after designated as GW.

EP 0 766 427 A2 describes such an office system, an example of which is shown in figure 1. Core of che system is a local area network herein after designated as LAN. Connected to the LAN are several communication devices (6,8,10,12), including low-power base station equipment as represented by the base unit 4, a server 11 and gateway equipment 1. The gateway equipment 1 connects the office communication system to a GSM network. From the point of view of a mobile switching centre MSC of the GSM system, the gateway computer should operate just like a base station controller BSC and it has to carry out the necessary protocol conversions between the GSM protocol and the protocols applied in the local area network. The interface between the gateway computer and the mobile switching centre can be implemented as a DSS.1 + interface.

The office communication system utilizes cells covering one or a few rooms, implemented mainly indoors. In a local area network using TCP/IP protocols, each base station is assigned a certain electrically defined IP address. A logged in mobile station located in the area of the office communication system continuously assigns itself to the base station of which reception is the best. Therefore, a mobile subscriber using such a mobile station can always be reached behind a specific IP address. When a subscriber is paged from the public land mobile network PLMN, the proper route to the appropriate IP-address needs to be found out.

The office communication system constitutes at least one location area of a GSM network. The gateway computer monitors mobility inside the office communication system and the databases of a mobile switching centre contain only the knowledge that the terminal is in the area controlled by a certain gateway computer. When a PAGING message addressed to the terminal is coming in, the mobile switching centre directs it to the gateway computer to which belongs the location area in which the addressed mobile subscriber is presently located. The gateway computer then directs the PAGING message to those base units that constitute the location area in which the terminal is situated according to the location database of the gateway computer.

A disadvantage of the state of the art with regard to the routing of a PAGING message of a mobile terminated call consists in the necessity of making use of a large database assigned to a mobile switching centre in which the present assignment of all mobile subscribers to a location area is stored.

Document EP 0 558 041 A2 relates to a method of calling mobile stations moving in a plurality of radio zones by broadcasting. When a call to a mobile station identified by an identification enters an MSC, the MSC retrieves from registration data that the mobile station is registered with a particular destination. The MSC sends out broadcast data for the call with this destination. The broadcast data is received by selective relays for forwarding the data via further selective relays to radio base stations for transmission. Each of the selective relays and the radio base stations forwards the received data only if the destination included in the data is stored at the respective unit.

In document US 5,305,466, it is proposed that an MSC holds the identifications of mobile stations existing in the radio zones of the radio base stations which it governs and location information of mobile stations having registered locations in the form of radio zone identifications. When a terminating call meant for a certain mobile station arrives, the MSC locates a particular radio zone where the mobile station has registered the location. Then, the MSC sends a paging signal including the location area of the mobile station of interest to all radio base stations which it supervises by broadcasting. The radio base stations compare stored location information with the received paging signal. If the location area included in the calling signal includes the identification of the radio zone of the location information, the radio base station executes calling in the own radio zone.

It is the object of the invention to improve a method and an office communication system for routing a paging message in the way that the workload of the mobile switching centre MSC is reduced.

This object is reached for the method in that it further comprises the following steps:
the paging message including location area identity information specifying the LA in which the MS addressed by the paging message is located;
forwarding the paging message received From the PLMN by the MSC to all GWs connected to the MSC without evaluating the local area identification information;
evaluating in each GW the location area identity information included in the received paging message; and
forwarding the paging message by the GW of the OS to which the specified LA belongs to the addressed mobile subscriber.

The invention proceeds from the idea that a PAGING message is very short. Sending the PAGING message to all connected gateway computers therefore does not much burden the system. On the other hand, large databases for the mobile switching centres with the assignment of all mobile subscribers to a location area are no longer necessary for the routing of a PAGING message.

In order to be able to decide whether a PAGING message has to be deleted or to be forwarded, each gateway carries out an evaluation of the received location area identity information. Thereby the gateway determines whether the received PAGING message is meant for a mobile subscriber located within a location area of the office communication system to which the gateway belongs, so it can proceed accordingly.

The object is further solved by the subject matter of claim 3.

The invention is explained in more detail with reference to the drawings of which
- Fig. 1: shows a communication system according to the state of the art, and
- Fig. 2a-2d: show the routing of a PAGING message to a mobile subscriber.

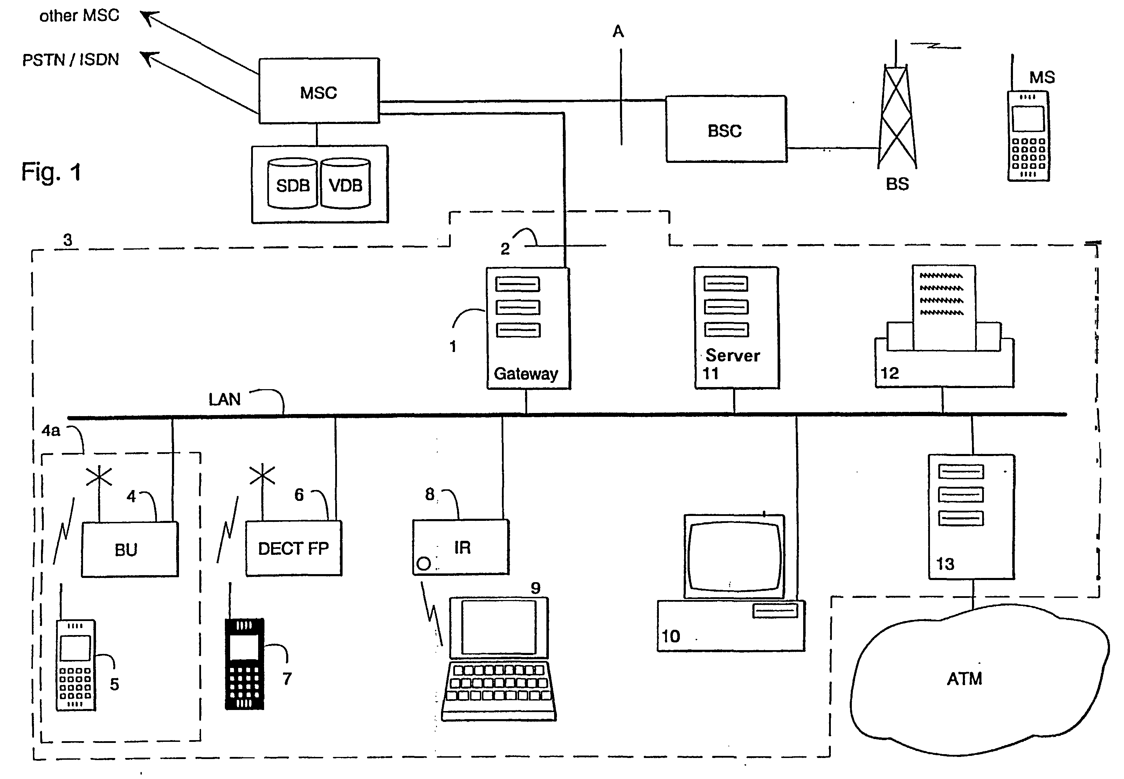

Figure 1 has been described above with relation to the state of the art.

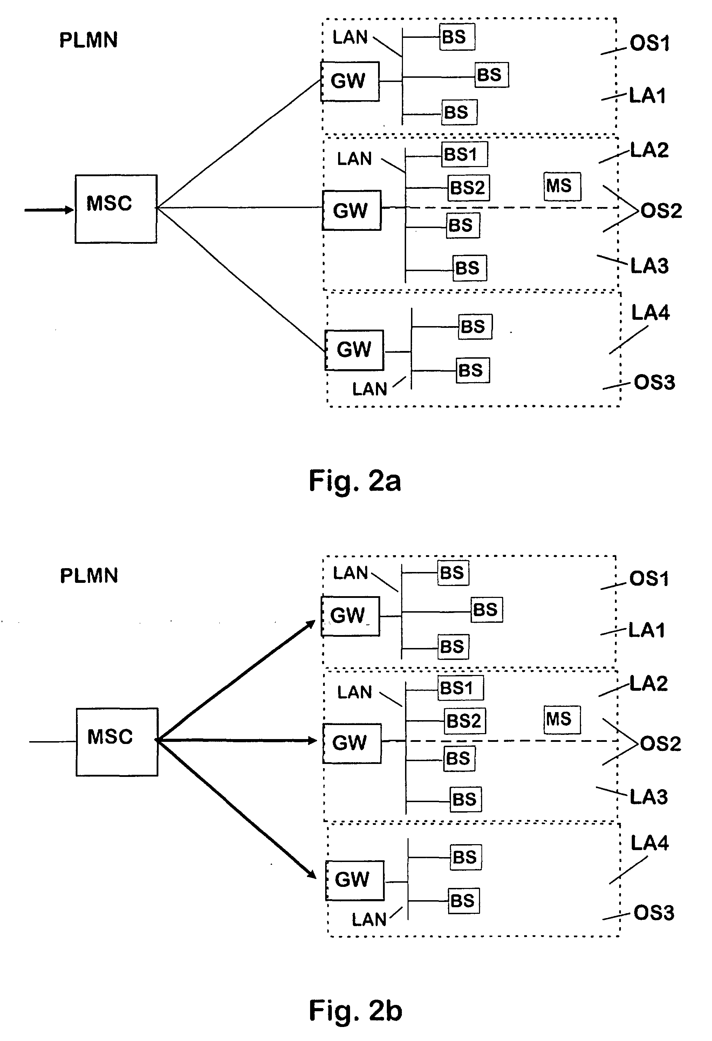

Figures 2a-2d show each a part of a public land mobile network PLMN, e.g. a GSM network, and three office communication systems OS1-OS3. The three office communication systems correspond each in principle to the office communication system of figure 1.

The depicted part of the GSM network comprises a mobile switching centre MSC connected to the three office communication systems OS1,OS2,OS3. The connections of the GSM network with the different office communication systems OS1,OS2,OS3 are realized by gateway computers GW integrated in each office system.

Each gateway computer is connected to a local area network LAN providing the means for the internal communication within the office communication system.

The local area networks LAN interconnect a variety of communication devices in an office communication system OS of which only base stations BS are shown in fig. 2a-d. To each of those communication devices is assigned an IP-address that is unique for the respective office system OS. A mobile subscriber in the office communication system is always located behind a certain IP-address, since to each base station BS, like to any other communication device, is assigned such an IP-address in the local area network LAN and an activated mobile station MS constantly assigns itself to the base station BS of which signals can be received best. The IP-space of each office system is divided into location areas LA which are managed autonomously by access network entities (not shown explicitly). Information including the IP-addresses of the mobile subscribers present in a location area LA is stored in each access network entity. Each office system OS comprises at least one such location area LA; in figures 2a-d, the office systems OS1 and OS3 each comprise one location area LA1 and LA4 respectively and the office system OS2 two location areas LA2 and LA3.

In the situation shown, a mobile subscriber using a mobile station MS is located in the office communication systems OS1, location area LA1 and the mobile station MS has assigned itself to the base station BS1.

Fig. 2a-d illustrate the routing of a PAGING message of a mobile terminated call from the GSM network to a mobile station MS located within the boundaries of one of the office communication systems OS2. The route of the message is indicated in each figure by arrows.

A PAGING message comes in at the mobile switching centre MSC (figure 2a).

The mobile switching centre MSC does not evaluate any location area identity LAI information included in the PAGING message, but forwards the message to all gateway computers GW of the connected office communication systems OS1,OS2,OS3 (figure 2b).

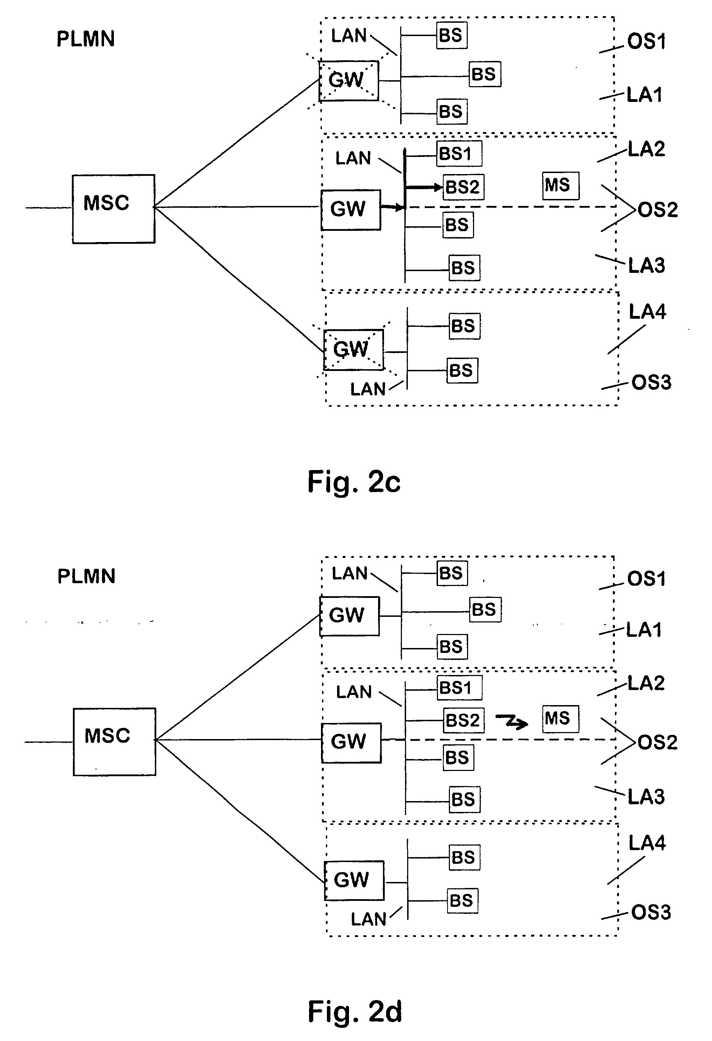

Figure 2c shows the next step of the routing of the PAGING message. In the office communication systems OS1,OS2,OS3 the gateway computers GW evaluate whether the incoming PAGING message is meant for a mobile subscriber located in a location area that belongs to the respective office communication system.

The PAGING message is deleted by those gateway computers GW that are part of the office communication systems OS1,OS3 in the boundaries of which the addressed mobile subscriber is not located presently.

The gateway computer GW that is part of the office communication system OS2 within the boundaries of which the mobile subscriber is located, exploits the location area identity LAI information included in the PAGING message and determines thereby in which location area LA2/LA3 the mobile subscriber is presently located for further routing of the message.

In the case shown, the office communication system OS2 covers two location areas LA2,LA3. The addressed subscriber is located in location area LA2. Therefore, the gateway computer GW transmits the PAGING message to the access network entity that is responsible for the location area LA2, which then takes care of the further transmission of the message to the base station BS2 according to the locally stored information about the present subscribers and their assigned IP-addresses.

Finally, the PAGING message is transmitted from the base station BS2, to which the addressed mobile station had assigned itself, by radio interface to the mobile station (figure 2d).

## Claims

1. A method for setting-up a mobile call by routing a paging message from a public land mobile network herein after designated as PLMN via a mobile switching centre herein after designated as MSC to a mobile station herein after designated as MS used by a mobile subscriber located within a location area herein after designated as LA of an office communication system herein after designated as OS,
wherein the MSC communicates with at least one OS via a respective gateway herein after designated as GW,
**characterised by**
the paging message including location area identity information specifying the LA in which the MS addressed by the paging message is located;
forwarding the paging message received from the PLMN by the MSC to all GWs connected to the MSC, without evaluating the local area identity information;
evaluating in each GW the location area identity information included in the received paging message; and forwarding the paging message by the GW of the OS to which the specified LA belongs to the addressed mobile subscriber.

2. Method according to claim 1, **characterised by** deleting in the GWs the paging messages of those OSs to which the LA of the addressed subscriber does not belong.

3. System comprising an integrated office communication system herein after designated as OS, and a public land mobile network herein after designated as PLMN, the OS comprising a local area network herein after designated as LAN interconnecting a variety of communication devices of the OS, those devices including base stations, each being accessible via an access network entity corresponding to a location area herein after designated as LA, the LAN being connected with a mobile switching centre herein after designated as MSC of the PLMN via a gateway herein after designated as GW,
**characterised in that** the GW comprises means
- for receiving a paging message including location area identity information, containing the information in which LA a mobile subscriber addressed by the paging message is presently located, from the MSC during a mobile call setup, the MSC being adapted to forward the paging message received from the PLMN to the GW, without evaluating the local area identity information,
- for evaluating the location area identity information and thereby determining if the received paging message is meant for a mobile subscriber located within a LA of the OS, and
- for forwarding the paging message to the appropriate network access entity, if the included location area identity information refers to one of the LAs of the OS.

4. System according to claim 3, **characterised in that** the GW deletes the received paging message if the included location area identity information does not refer to one of the LAs within the OS.

## Patentansprüche

1. Verfahren zum Aufbau eines Mobilfunkgesprächs durch Leitweglenkung einer Paging-Nachricht von einem öffentlichen landgestützten Mobilfunknetz, welches in der Folge als PLMN bezeichnet wird, über eine Mobilfunkvermittlungsstelle, welche in der Folge als MSC bezeichnet wird, zu einer Mobilstation, welche in der Folge als MS bezeichnet wird und durch einen Mobilfunkteilnehmer verwendet wird, der sich innerhalb eines Standortbereiches, welcher in der Folge als LA bezeichnet wird, eines Bürokommunikationssystems, welches in der Folge als OS bezeichnet wird, aufhält,
wobei die MSC über einen entsprechenden Gateway, welcher in der Folge als GW bezeichnet wird, mit mindestens einem OS kommuniziert,
**gekennzeichnet dadurch, dass**
die Paging-Nachricht Standortbereichkennungsdaten enthält, welche den LA spezifizieren, in welchem sich die MS, an welche die Paging-Nachricht gerichtet ist, befindet;
die durch die MSC von dem PLNM empfangene Paging-Nachricht an alle GWs, die an die MSC angebunden sind, ohne Auswerten der Standortbereichkennungsdaten weitergeleitet wird;
die Standortbereichkennungsdaten, welche in der empfangenen Paging-Nachricht enthalten sind, in jedem GW ausgewertet werden; und die Paging-Nachricht durch den GW des OS, zu welchem der spezifizierte LA gehört, an den Empfangs-Mobilfunkteilnehmer weitergeleitet wird.

2. Verfahren nach Anspruch 1, **gekennzeichnet durch** Löschen der Paging-Nachrichten von jenen OS, zu welchen der LA des Empfangs-Teilnehmers nicht gehört, in den GWs.

3. System, umfassend ein integriertes Bürokommunikationssystem, welches in der Folge als OS bezeichnet wird, und ein öffentliches landgestütztes Mobilfunknetz, welches in der Folge als PLMN bezeichnet wird, wobei das OS ein lokales Netz umfasst, welches in der Folge als LAN bezeichnet wird und eine Vielfalt von Kommunikationsvorrichtungen des OS untereinander verbindet, wobei jene Vorrichtungen Basisstationen umfassen, von denen jede über eine Zugangsnetzentität zugänglich ist, welche einem Standortbereich, der in der Folge als LA bezeichnet wird, entspricht, wobei das LAN mit einer Mobilfunkvermittlungsstelle des PLMN, welche in der Folge als MSC bezeichnet wird, über einen Gateway, welcher in der Folge als GW bezeichnet wird, verbunden ist,
**dadurch gekennzeichnet, dass** der GW Mittel umfasst
- zum Empfangen einer Paging-Nachricht, welche Standortbereichskennungsdaten enthält, welche jene Information umfassen, in welchem LA ein Mobilfunkteilnehmer, an den die Paging-Nachricht gerichtet ist, sich gegenwärtig aufhält, von der MSC während eines Mobilfunkgesprächaufbaus, wobei die MSC ausgebildet ist, um die von dem PLMN empfangene Paging-Nachricht an den GW weiterzuleiten, ohne die Standortbereichskennungsdaten auszuwerten,
- zum Auswerten der Standortbereichskennungsdaten und dadurch zum Ermitteln, ob die empfangene Paging-Nachricht für einen Mobilfunkteilnehmer, der sich innerhalb eines LA des OS aufhält, bestimmt ist, und
- zum Weiterleiten der Paging-Nachricht an die geeignete Netzzugangsentität, wenn sich die enthaltenen Standortbereichskennungsdaten auf einen der LAs des OS beziehen.

4. System nach Anspruch 3, **dadurch gekennzeichnet, dass** der GW die empfangene Paging-Nachricht löscht, wenn sich die enthaltenen Standortbereichskennungsdaten nicht auf eine der LAs innerhalb des OS beziehen.

## Revendications

1. Procédé pour installer un appel mobile en acheminant un message de radiomessagerie d'un réseau mobile terrestre publique désigné ci-après PLMN par l'intermédiaire d'un centre de commutation mobile désigné ci-après MSC à une station mobile désignée ci-après MS utilisée par un abonné mobile situé dans une zone d'emplacement désignée ci-après LA d'un système de communication bureautique désigné ci-après OS,
par lequel le centre de commutation mobile MSC communique avec au moins un système de communication bureautique OS par l'intermédiaire d'une passerelle respective désignée ci-après GW,
**caractérisé par** :
- l'inclusion dans le message de radiomessagerie de l'information d'identité de la zone d'emplacement indiquant la zone d'emplacement LA dans laquelle la station mobile MS, adressée par le message de radiomessagerie, est située;
- l'expédition du message de radiomessagerie reçu du réseau mobile terrestre publique PLMN par le centre de commutation mobile MSC à toutes les passerelles GW connectées au centre de commutation mobile MSC, sans évaluer l'information locale d'identité de la zone;
- l'évaluation dans chaque passerelle GW de l'information d'identité de la zone d'emplacement incluse dans le message reçu de radiomessagerie; et
- l'expédition du message de radiomessagerie par la passerelle GW du système de communication bureautique OS auquel la zone d'emplacement LA indiquée appartient à l'abonné mobile adressé.

2. Procédé selon la revendication 1, **caractérisé par** la suppression dans les passerelles GW des messages de radiomessagerie de ces systèmes de communication bureautique OS auxquels la zone d'emplacement LA de l'abonné adressé n'appartient pas.

3. Système comportant un système de communication bureautique intégré désigné ci-après OS, et un réseau mobile terrestre publique désigné ci-après PLMN, le système de communication bureautique intégré OS comportant un réseau local désigné ci-après LAN interconnectant une variété de dispositifs de communication du système de communication bureautique OS, ces dispositifs comprenant des stations de base, chacune étant accessible par l'intermédiaire d'une entité de réseau d'accès correspondant à une zone d'emplacement désignée ci-après LA, le réseau local LAN étant connecté à un centre de commutation mobile désigné ci-après MSC du réseau mobile terrestre publique PLMN par l'intermédiaire d'un passerelle désignée ci-après GW,
**caractérisé en ce que** la passerelle GW comporte des moyens:
- pour recevoir un message de radiomessagcric comprenant l'information d'identité de la zone d'emplacement, contenant l'information dans quelle zone d'emplacement LA un abonné mobile adressé par le message de radiomessagerie est présentement situé, du centre de commutation mobile MSC durant une mise en place d'un appel mobile, le centre de commutation mobile MSC étant adapté pour expédier le message de radiomessagerie reçu du réseau mobile terrestre publique PLMN à la passerelle GW, sans évaluer l'information locale d'identité de la zone,
- pour évaluer l'information d'identité de zone d'emplacement et déterminer de ce fait si le message reçu de radiomessagerie est signifié pour un abonné mobile situé dans une zone d'emplacement LA du système de communication bureautique OS, et
- pour expédier le message de radiomessagerie à l'entité appropriée d'accès de réseau, si l'information incluse d'identité de la zone d'emplacement se rapporte à une des zones d'emplacement LA du système de communication bureautique OS.

4. Système selon la revendication 3, **caractérise en ce que** la passerelle GW supprime le message reçu de radiomessagerie si l'information incluse d'identité de la zone d'emplacement ne se rapporte pas à une des zones d'emplacement LA dans le système de communication bureautique OS.
